# EUROPEAN PATENT APPLICATION

(11) **EP 4 124 987 A1**
(43) Date of publication of application: **01.02.2023**
(21) Application number: 21382699.3
(22) Date of filing: 27.07.2021
(51) Int. Cl.: G06F 30/15, G06F 30/23, G06F 119/14

(54) **METHOD FOR CALCULATING INTERACTIONS BETWEEN A FLUID AND A STRUCTURE ON LIFTING SURFACES**

(71) Applicant: Airbus Operations, S.L.U., 28906 Getafe (Madrid) (ES)
(72) Inventor: LLAMAS SANDIN, Raul, Carlos, 28906 GETAFE (Madrid) (ES); BAILEY NOVAL, Nicolas, 28906 GETAFE (Madrid) (ES)
(74) Representative: Herrero & Asociados, S.L.

(57) **Abstract**

The method for calculating interactions between a fluid and a structure on lifting surfaces comprises the steps: the lifting surface is discretized in two models, a superficial mesh for aerodynamic calculations, and a unidimensional mesh for calculating a structural beam; aerodynamic forces are calculated with the superficial mesh; the calculated aerodynamic forces are applied to the structural beam, promoting a deformation; the deformation of the structural beam is calculated; the deformation of the structural beam is extrapolated to the complete lifting surface, obtaining a new lifting surface; a comparison between the new lifting surface and the previous lifting surface is made, determining if the new lifting surface and the previous lifting surface converge or not; and if the new lifting surface and the previous lifting surface do not converge, previous steps are repeated until the new lifting surface and the previous lifting surface converge.

## Description

The present invention refers to a method for calculating interactions between a fluid and a structure on lifting surfaces, in particular, between air and aircraft components.

### Background of the invention

There are different disciplines that predict the physical phenomena occurring on an aircraft, some of them interacting with each other. Aerodynamics and structures are two disciplines that are strongly related. The aerodynamic forces deform the geometry of the components depending on the stiffness of these components, and the new deformed geometry generate different aerodynamic loads.

This iterative FSI (fluid-structure interaction) multi-physics process should converge to a solution that is stable where the deformation and the aerodynamic loads are in equilibrium. In slender bodies such as wings fuselage and empennages, this deformation effects are important to take into account from the conceptual phases, it is then important to have tools that predict this FSI behavior.

The usual way of coupling with FSI is by an iterative process. Having a geometric and structural definition, first the aerodynamics problem is solved, the forces are retrieved, and they are mapped on a structural model, getting the deformation of the model. Then, this deformation is applied to the geometry, recalculating the aerodynamic loads.

This process should converge to an iteration where the loads or the displacements are similar with a certain threshold compared to the previous iteration. The whole process is performed sometimes with manual intervention, making the automation of the process very complex.

The current state of the art for approaching this static aeroelastic, or, more generally, fluid-structure interaction problem relies on a linear model of the structure. The main shortcoming of this approach is that the length of the model increases in the deformed state as, being based on the small deformation approximation, "vertical" displacements of the structure produce an artificial stretch of said structure which leads to a wrong calculation of the fluid forces over the deformed structure in the next iteration, which in fact can lead to numerical instability and divergence.

### Description of the invention

Therefore, one purpose of the present invention is to provide a method for calculating interactions between a fluid and a structure on lifting surfaces that is able to reach a convergence in seconds in a fully automatic method.

With the method according to the present invention it is possible to solve said drawbacks, providing other advantages that are described below.

The method for calculating interactions between a fluid and a structure on lifting surfaces according to the present invention comprises the following steps:
a) the lifting surface is discretized in two models, a superficial mesh for aerodynamic calculations, and a unidimensional mesh for calculating a structural beam;
b) aerodynamic forces are calculated with the superficial mesh;
c) the calculated aerodynamic forces are applied to the structural beam, promoting a deformation;
d) the deformation of the structural beam is calculated;
e) the deformation of the structural beam is extrapolated to the complete lifting surface, obtaining a new lifting surface;
f) a comparison between the new lifting surface and the previous lifting surface is made, determining if the new lifting surface and the previous lifting surface converge or not; and
g) if the new lifting surface and the previous lifting surface do not converge, steps a) to f) are repeated until the new lifting surface and the previous lifting surface converge.

Preferably, the unidimensional mesh is discretized extracting leading edge and trailing edge curves of the lifting surface.

Furthermore, the convergence between the new lifting surface and the previous lifting surface is preferably determined by comparison of displacement metrics when the structural beam is deformed.

The method according to the present invention combines low order aerodynamic and structural analysis processes and is able to reach a convergence in seconds in a fully automatic method.

Notably, the structural analysis model relies on an innovative approach which corrects the length of the structural elements in the spanwise direction, so that, although at each internal iteration the solver is linear, the final deformed state represents accurately the non-linear deformation of the lifting surface.

Thus, the method according to the present invention solve the instabilities observed in FSI applications based on linear structural models.

The efficiency of the method according to the present invention allows to use this FSI analysis in an optimization loop, design of experiments, and in conceptual design phases to understand these phenomena, which is of particular interest for the study of large aspect ratio lifting surfaces.

### Description of a preferred embodiment

A preferred embodiment of the method according to the present invention is described hereinafter.

The method according to the present invention is for calculating interactions between a fluid, preferably air, and a structure on lifting surfaces, such as components of aircrafts.

Firstly, the lifting surface on which the interactions between the fluid and the structure is calculated is discretized in two models.

The first model is a superficial mesh for aerodynamic calculations, and the second model is a unidimensional mesh for calculating a structural beam. Said unidimensional mesh is preferably discretized extracting leading edge and trailing edge curves of the lifting surface on which the interactions are calculated.

Then aerodynamic forces are calculated with the superficial mesh, and the calculated aerodynamic forces are applied to the structural beam, promoting a deformation.

Subsequently, the deformation of the structural beam is calculated, and this deformation of the structural beam is extrapolated to the complete lifting surface. This way, a new lifting surface is obtained.

This new lifting surface and the previous lifting surface are compared, determining if the new lifting surface and the previous lifting surface converge or not.

This convergence between the new lifting surface and the previous lifting surface is determined comparing displacement metrics when the structural beam is deformed.

If it is determined that the new lifting surface and the previous lifting surface do not converge, then the method starts again, and it is repeated until the new lifting surface and the previous lifting surface converge.

Even though reference has been made to a specific embodiment of the invention, it is obvious for a person skilled in the art that the method described herein is susceptible to numerous variations and modifications, and that all of the details mentioned can be substituted for other technically equivalent ones without departing from the scope of protection defined by the attached claims.

## Claims

1. Method for calculating interactions between a fluid and a structure on lifting surfaces, **characterized in that** it comprises the following steps:
a) the lifting surface is discretized in two models, a superficial mesh for aerodynamic calculations, and a unidimensional mesh for calculating a structural beam;
b) aerodynamic forces are calculated with the superficial mesh;
c) the calculated aerodynamic forces are applied to the structural beam, promoting a deformation;
d) the deformation of the structural beam is calculated;
e) the deformation of the structural beam is extrapolated to the complete lifting surface, obtaining a new lifting surface;
f) a comparison between the new lifting surface and the previous lifting surface is made, determining if the new lifting surface and the previous lifting surface converge or not; and
g) if the new lifting surface and the previous lifting surface do not converge, steps a) to f) are repeated until the new lifting surface and the previous lifting surface converge.

2. Method for calculating interactions between a fluid and a structure on lifting surfaces according to claim 1, wherein the unidimensional mesh is discretized extracting leading edge and trailing edge curves of the lifting surface.

3. Method for calculating interactions between a fluid and a structure on lifting surfaces according to claim 1, wherein the convergence between the new lifting surface and the previous lifting surface is determined by comparison of displacement metrics when the structural beam is deformed.
